# EUROPEAN PATENT APPLICATION

(11) **EP 4 459 712 A1**
(43) Date of publication of application: **06.11.2024**
(21) Application number: 22915959.5
(22) Date of filing: 23.12.2022
(51) Int. Cl.: H01M 4/505, H01M 4/131, H01M 4/1391, H01M 4/36, H01M 4/525, H01M 4/62

(54) **COMPOSITE ACTIVE MATERIAL**

(30) Priority: 27.12.2021 JP 2021212239
(71) Applicant: Mitsui Mining & Smelting Co., Ltd., Shinagawa-ku Tokyo 141-8584 (JP)
(72) Inventor: ITO, Takahiro, Ageo-shi, Saitama 362-0021 (JP); NAKAYAMA, Yuki, Ageo-shi, Saitama 362-0021 (JP); MIYASHITA, Norihiko, Ageo-shi, Saitama 362-0021 (JP); IKEDA, Takeshi, Ageo-shi, Saitama 362-0021 (JP); TAJIMA, Taketoshi, Ageo-shi, Saitama 362-0021 (JP); KAWAMURA, Takeru, Ageo-shi, Saitama 362-0021 (JP)
(74) Representative: Novagraaf Technologies
(86) International application number: PCT/JP2022/047679
(87) International publication number: WO 2023/127736

(57) **Abstract**

A composite active material of the present invention includes an active material and a surface portion located on the surface of the active material and containing a sulfur-containing compound. The active material contains a complex oxide containing a lithium (Li) element, a manganese (Mn) element, and an oxygen (O) element and having a spinel-type crystal structure. The active material preferably contains an element M1 (e.g., nickel) and an element M2 (e.g., titanium and aluminum). The complex oxide is also preferably represented by Li₁₊ₓ(M1_{y}M2_{z}Mn_{2-x-y-z})O_{4-δ}, where 0 ≤ x ≤ 0.20, 0.20 ≤ y ≤ 1.20, 0 ≤ z ≤ 0.5, and 0 ≤ δ ≤ 0.2.

## Description

### Technical Field

The present invention relates to a composite active material and an electrode material mixture, a coating composition, an electrode, and a solid-state battery including the composite active material.

### Background Art

Solid-state batteries include a solid electrolyte as an electrolyte and are therefore safer than batteries including an electrolyte solution. For this reason, solid-state batteries are expected to be used in various applications, including electric automobiles. As a positive electrode active material suitably used in solid-state batteries, the applicant of the present application previously proposed a positive electrode active material in which the surface of particles made of a spinel-type lithium manganese-containing complex oxide containing at least Li, Mn, and O and two or more elements other than these elements is coated with an amorphous compound containing Li, Nb, and O.

### Citation List

### Patent Literature

### Patent Literature 1: US 2020/194788A1

### Summary of Invention

The positive electrode active material disclosed in Patent Literature 1 advantageously reduces contact resistance between a solid electrolyte and the positive electrode active material to maintain a high working potential during discharge. However, for further increasing the battery output, and hence obtaining batteries with better performance, it is necessary to further lower the interfacial resistance between the particles.
Therefore, an object of the present invention is to provide a composite active material that can give good battery performance.

The present invention provides a composite active material comprising:
an active material; and
a surface portion located on a surface of the active material and comprising a sulfur-containing compound,
   wherein the active material comprises a complex oxide containing a lithium (Li) element, a manganese (Mn) element, and an oxygen (O) element and having a spinel-type crystal structure.

### Brief Description of Drawings

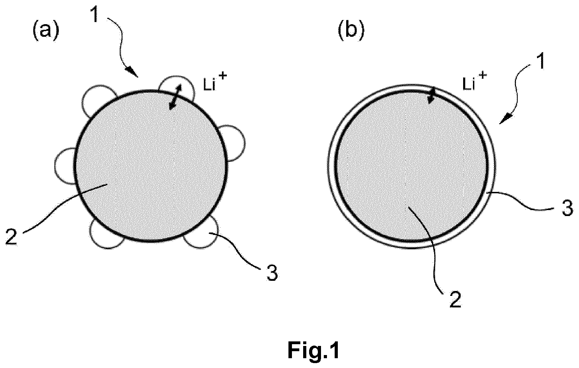

[Fig. 1] Figs. 1(a) and 1(b) schematically show a composite active material of the present invention.

### Description of Embodiments

Hereinafter, the present invention will be described by way of preferred embodiments thereof.

The present invention relates to a composite active material including an active material and a surface portion located on the surface of the active material. The active material and the surface portion of the composite active material of the present invention will be individually described below.

### Active Material

The active material is a part of the composite active material of the present invention that mainly contributes to an electrode reaction. In the present invention, the active material is typically in particle form, and the entire particle may be made of a single substance or may have a core particle and a coating portion located on the surface of the core particle. When the active material is the latter, the composite active material of the present invention has a structure having a core particle, a coating portion located on the surface of the core particle, and a surface portion located on the surface of the coating portion.

### Core Particle

The core particle to be used is preferably a core particle made of a spinel-type complex oxide containing a lithium (Li) element, a manganese (Mn) element, and an oxygen (O) element. This core particle is suitably used as a positive electrode active material. The core particle preferably has a working potential of at least 4.5 V against a potential of metallic Li as a reference potential, when used as a positive electrode active material. In the case where the core particle has a working potential of at least 4.5 V against the potential of metallic Li as a reference potential, reaction resistance is generally high disadvantageously, and this is especially true when the core particle contains a spinel-type complex oxide containing a lithium (Li) element, a manganese (Mn) element, and an oxygen (O) element. However, according to the present invention, even when such a core particle as described above is used, the effect of reducing reaction resistance can be exhibited remarkably. The expression "having a working potential of at least 4.5 V against a potential of metallic Li as a reference potential" does not necessarily mean "having only a working potential of at least 4.5 V as a plateau region", but also encompasses "partially having a working potential of at least 4.5 V". Accordingly, the core particle used in the present invention is not limited to a positive electrode active material consisting of a 5 V class positive electrode active material having a working potential of at least 4.5 V as a plateau region. For example, the core particle used in the present invention may also contain a positive electrode active material that has a working potential of less than 4.5 V as a plateau region. Specifically, the positive electrode active material preferably contains a 5 V class positive electrode active material in an amount of at least 30 mass%, more preferably at least 50 mass%, and even more preferably at least 80 mass% (including 100 mass%).

The complex oxide for the core particle may contain another element in addition to Li, Mn, and O.

The other element may be, for example, an element M1, where M1 is one element or a combination of two or more elements selected from the group consisting of a nickel (Ni) element, a cobalt (Co) element, and an iron (Fe) element.

The other element may also be an element M2, where M2 is one element or a combination of two or more elements selected from the group consisting of a sodium (Na) element, a magnesium (Mg) element, an aluminum (Al) element, a phosphorus (P) element, a potassium (K) element, a calcium (Ca) element, a titanium (Ti) element, a vanadium (V) element, a chromium (Cr) element, a copper (Cu) element, a gallium (Ga) element, an yttrium (Y) element, a zirconium (Zr) element, a niobium (Nb) element, a molybdenum (Mo) element, an indium (In) element, a tantalum (Ta) element, a tungsten (W) element, a rhenium (Re) element, and a cerium (Ce) element.

In the present invention, either the element M1 or M2, or both of the elements M1 and M2 may be contained.

A preferred example composition of the complex oxide for the core particle is a spinel-type lithium manganese-containing complex oxide having a crystal structure in which some of the Mn sites in LiMn₂O_{4-δ} are replaced with Li, the element M1, and the element M2.

The element M1 is a substituent element that mainly contributes to providing a working potential of at least 4.5 V against a potential of metallic Li as a reference potential, and as described above, the element M1 includes at least one of Ni, Co, and Fe. In particular, the element M1 preferably includes at least one of Ni and Co.

The element M2 is a substituent element that mainly contributes to stabilization of the crystal structure and therefore improvement in battery characteristics. The element M2 is a different elemental species from the element M1.

An example of the composition of the complex oxide for the core particle is a spinel-type lithium manganese-containing complex oxide represented by formula (1) below. M1 and M2 in formula (1) are as described above.

Li₁₊ₓ(M1_{y}M2_{z}Mn_{2-x-y-z})O_{4-δ} (1)

In formula (1), x satisfies 0 ≤ x ≤ 0.20. In particular, x is preferably 0.01 or more, or 0.10 or less, and particularly 0.02 or more, or 0.08 or less.
y indicates the content of M1, and satisfies 0.20 ≤ y ≤ 1.20. In particular, y is preferably 0.30 or more, or 1.10 or less, and particularly 0.35 or more, or 1.05 or less.
z indicates the content of M2, and satisfies 0 ≤ z ≤ 0.50. In particular, z may be 0.40 or less, and more preferably, z is 0.30 or less.

Another example composition of the complex oxide for the core particle is a spinel-type lithium manganese-containing complex oxide represented by formula (2) below.

Li₁₊ₓ(Ni_{y}M_{z}Mn_{2-x-y-z})O_{4-δ} (2)

In formula (2), x satisfies 0 ≤ x ≤ 0.20. In particular, x is preferably 0.01 or more and 0.10 or less, and more preferably 0.02 or more and 0.08 or less. In formula (2), y preferably satisfies 0.20 ≤ y ≤ 0.70. In particular, y is more preferably 0.30 or more and 0.60 or less, and even more preferably 0.35 or more and 0.55 or less.

In formula (2), z indicates the mole ratio of M, and preferably satisfies 0 ≤ z ≤ 0.5. In particular, z is more preferably 0.45 or less, even more preferably 0.40 or less, and yet even more preferably 0.35 or less.

In formula (2), M is preferably one element or a combination of two or more elements selected from the group consisting of Na, Mg, Al, P, K, Ca, Ti, V, Cr, Fe, Co, Cu, Ga, Y, Zr, Nb, Mo, In, Ta, W, Re, and Ce.

"4-δ" in the formulae (1) and (2) indicates that an oxygen vacancy may be included. Alternatively, some oxygen sites may be replaced with fluorine or another element. δ is preferably 0 or more and 0.2 or less. In particular, δ is more preferably 0.1 or less, and even more preferably 0.05 or less.

The complex oxide for the core particle may contain a boron (B) element. For example, boron may be present in a spinel crystalline phase. Boron may also be present in a complex oxide phase containing Ni, Mn, and B. An example of the complex oxide phase containing Ni, Mn, and B is a Ni₈MnO₄(BO₈)₂ crystalline phase. Whether or not a core particle contains the Ni₈MnO₄(BO₈)₂ crystalline phase can be determined by comparing a diffraction pattern obtained by X-ray diffractometry (hereinafter also referred to as "XRD") of the core particle of interest with the PDF (Powder Diffraction File) number "01-079-1029". A complex oxide containing Ni, Mn, and B is presumed to be located on the surface and at the grain boundaries of the core particle.

With regard to the content of the complex oxide phase containing Ni, Mn, and B, the content of the B element in the core particle is preferably 0.02 mass% or more and 0.80 mass% or less, and more preferably 0.05 mass% or more and 0.60 mass% or less, and in particular, the content of the B element is even more preferably 0.30 mass% or less, and yet even more preferably 0.25 mass% or less. When the content of the B element is 0.02 mass% or more, a discharge capacity at a high temperature (e.g., 45°C) can be maintained. When the content of the B element is 0.80 mass% or less, rate characteristics can be maintained.

The complex oxide for the core particle may contain other components in addition to Li, Mn, M, M1, M2, and O described above. The content of the other elements is not particularly limited as long as the active material has desired characteristics, and for example, the content of each of the other elements is preferably 0.5 mass% or less, and more preferably 0.2 mass% or less. When the content of the other elements is within the above-described range, the complex oxide for the core particle can exhibit excellent properties as the active material.

Whether or not the complex oxide for the core particle has a spinel-type crystal structure can be determined by, for example, performing fitting to a crystal structure model of the cubic crystal with the space group Fd-3m (Origin Choice 2), and if the ranges of Rwp and S, which indicate the degree of agreement between the found intensity and the calculated intensity, satisfy Rwp < 10 or S < 2.5, it can be determined that the crystal structure of the complex oxide is a spinel-type crystal structure.

Primary particles of the core particle may be monocrystalline or polycrystalline, and are preferably polycrystalline. "Monocrystalline" means that the primary particles are each composed of a single crystallite, while "polycrystalline" means that a plurality of crystallites are present in each of the primary particles. Whether or not the core particle is polycrystalline can be checked by observing a cross section of its primary particle under electron backscatter diffractometry (EBSD), for example. If the core particle is polycrystalline, it can be found that crystals with a plurality of orientations are present in a primary particle.

### Coating Portion

The active material for the composite active material of the present invention preferably has the above-described core particle and a coating portion. When the active material has the coating portion, the contact between the core particle and the surface portion can be prevented in the composite active material. In other words, the core particle, the coating portion, and the surface portion are arranged in this order. Such a configuration can prevent, for example, unfortunate formation of a resistive layer at the interface between the core particle and the surface portion and can therefore prevent such a resistive layer from inhibiting the transfer of lithium ions.

In view of improving the performance of a battery including the composite active material of the present invention, the coating portion preferably contains a lithium (Li) element, an element A (A is at least one selected from the group consisting of a titanium (Ti) element, a zirconium (Zr) element, a tantalum (Ta) element, a niobium (Nb) element, and an aluminum (Al) element), and an oxygen (O) element, regardless of the type of the core particle. The element A is preferably at least one of Ta and Nb. Furthermore, the element A preferably includes at least Nb, and in particular, the element A is preferably Nb.

When the element A is at least one element of Ta and Nb, the composition of the coating portion can be represented by LiₓAO_{y}, for example. Typically, the composition may be LiAOs, that is, a composition in which x = 1 and y = 3. When the coating portion is made of an amorphous compound as described later, x and y in the formula can be any values within their respective ranges according to the valences of the elements. In particular, the coating portion particularly preferably has a composition containing more than 1 mole of Li per mole of the element A (i.e., 1 < x), in view of improving the performance of a battery including the composite active material of the present invention.

In a case where the compound constituting the coating portion is represented by LiₓAO_{y}, a method for satisfying 1 < x may include, for example, adjusting the amount of the lithium source material used relative to the amount of the element A source material used such that the amount of Li is in excess of the amount in the stoichiometric compositional ratio of the composition expected to be produced, for example, LiAOs. In this case, simply adding Li in an excess amount results in the formation of lithium carbonate on the surface of the active material due to the excess lithium, and the lithium carbonate thus formed causes resistance and may actually degrade the rate characteristics and the cycle characteristics. For this reason, it is preferable to adjust the amounts of the element A source material and the lithium source material added such that the compound constituting the coating portion has a predetermined composition, with consideration given to the formation of lithium carbonate.

On the surface of the core particle, the coating portion may be present in the form of particles, may be present in the form of aggregate particles, which are formed by aggregation of particles, or may be present in the form of a layer. The expression "be present in the form of a layer" means a state in which the material constituting the coating portion is present with a certain thickness. The thickness of the coating portion, which coats the surface of the core particle, may be uniform or nonuniform. Whether the surface of the core particle is coated with the coating portion can be checked by, for example, observing the surface of the core particle using an electron microscope. The coverage by the coating portion is not particularly limited as long as the coating portion is present at least on the surface of the core particle. In the present invention, the coverage of the core particle by the coating portion is, for example, preferably 50% or more, more preferably 70% or more, even more preferably 80% or more, yet even more preferably 90% or more, and yet even more preferably 95% or more.

The coating portion may be crystalline or amorphous, but is preferably amorphous. When the coating portion is amorphous, the coating portion serves as a buffer layer between the core particle and the surface portion in the present invention and can thus reduce the reaction resistance. Whether the coating portion is crystalline or amorphous can be determined by, for example, checking whether a halo pattern is obtained through selected area electron diffraction. The term "halo pattern" refers to a broad diffraction pattern at lower angles with no distinct diffraction peak.

The coating portion can be formed using the following method, for example: a lithium source material and an element A source material are dissolved in a solvent to prepare a mixed solution; core particles are added thereto; and then the resulting mixture is dried and fired under predetermined conditions to form the coating portion. However, this method is merely a preferred example, and the method for forming the coating portion is not limited to this method. For example, it is also possible to form the coating portion using, for example, a coating method involving use of a tumbling fluidized bed, a sol-gel method, a mechanofusion method, a CVD method, or a PVD method, under appropriately tailored conditions.

The amount of the coating portion, which coats the surface of the core particle, can be expressed in terms of the proportion of the element A in the composite active material of the present invention. The proportion of the element A in the composite active material is, for example, preferably 0.2 mass% or more, more preferably 0.5 mass% or more, even more preferably 1.0 mass% or more, and yet even more preferably 1.5 mass% or more. On the other hand, the proportion of the element A is, for example, preferably 5.0 mass% or less, more preferably 4.0 mass% or less, and even more preferably 3.5 mass% or less. When the amount of the coating portion is within the above-described range, the advantages resulting from the formation of the coating portion are remarkable.

Furthermore, the BET specific surface area of an active material particle including the core particle and the coating portion is, for example, preferably 0.5 m²/g or more, more preferably 1.0 m²/g or more, even more preferably 1.5 m²/g or more, and yet even more preferably 2.0 m²/g or more. On the other hand, the BET specific surface area is, for example, preferably 8.0 m²/g or less, more preferably 7.0 m²/g or less, and even more preferably 6.0 m²/g or less. When the amount of the coating portion is within the above-described range as well, the advantages resulting from the formation of the coating portion are remarkable.

### Surface Portion

In the composite active material of the present invention, the surface portion is located on, and preferably coats, the surface of the active material described above. The surface portion provides the outermost surface of each particle of the composite active material of the present invention. The surface portion contains a sulfur-containing compound. The sulfur-containing compound preferably has lithium ion conductivity. It is surmised that, in the composite active material of the present invention having the structure as described above, the interfacial contact area between the active material 2 and the surface portion 3 is increased as shown in the schematic diagrams of Figs. 1(a) and 1(b), to thereby make the transport of lithium ions smoother. It is also surmised that the lithium ion conductivity of the sulfur-containing compound contained in the surface portion 3 contributes to an improvement in battery performance. In addition, it is surmised that the surface portion 3 deforms to suppress the formation of voids between the particles of the composite active material 1, to thereby make the transport of lithium ions between the composite active material 1 and the solid electrolyte (not shown) even smoother.

In view of making the above-described advantages more remarkable, the coverage of the active material by the surface portion is, for example, preferably 60% or more, more preferably 70% or more, and even more preferably 80% or more. The surface portion may coat the entire surface of the active material. In other words, the coverage of the active material by the surface portion may be 100%. It is preferable that the surface portion coats the active material with this coverage, because this increases the interfacial contact area between the active material and the surface portion and makes the transport of lithium ions even smoother. A method for measuring the coverage of the active material by the surface portion will be described in Examples later.

In view of improving the performance of a battery including the composite active material of the present invention even further, the thickness of the surface portion is, for example, more than 0 nm, preferably 50 nm or more, more preferably 70 nm or more, and even more preferably 100 nm or more. When the surface portion having such a thickness coats the active material, the formation of voids between the particles of the composite active material is effectively suppressed, whereby the lithium ion conductivity of the composite active material is improved even further. On the other hand, the thickness of the surface portion is, for example, preferably 500 nm or less, more preferably 300 nm or less, and even more preferably 250 nm or less. When the surface portion having such a thickness coats the active material, the electron conductivity between the particles of the active material can be guaranteed, and therefore the battery performance is improved even further. A method for measuring the thickness of the surface portion will be described in Examples later

In the present invention, the expression "the surface portion coats the active material" means that the exposed surface area of the core particle is small, and is specified by the above-described coverage.

The surface portion contains a sulfur-containing compound as described above. The sulfur-containing compound used is preferably a compound having lithium ion conductivity.

Examples of the sulfur-containing compound include Li₂S-P₂S₅, Li₂S-P₂S₅-LiI, Li₂S-P₂S₅-LiCl, Li₂S-P₂S₅-LiBr, Li₂S-P₂S₅-LiCl-LiBr, Li₂S-P₂S₅-LiCl-LiI, Li₂S-P₂S₅-LiBr-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n each independently represent a positive number, and Z represents one or more selected from Ge, Zn, and Ga), Li₂S-GeS₂, Li₂S-SiS₂-Li₃PO₄, Li₂S-SiS₂-LiₓMO_{y} (x and y each independently represent a positive number, and M represents any one or more of P, Si, Ge, B, Al, Ga, and In), and Li₁₀GeP₂S₁₂.

The sulfur-containing compound may be a crystalline compound or an amorphous compound such as glass ceramics. In a case where the sulfur-containing compound is a crystalline material, the sulfur-containing compound preferably contains a crystalline phase having an argyrodite-type crystal structure. The reason for this is as follows.

JP 2017-152347A discloses a technology of coating the surface of an active material with a glass ceramic made of a sulfur-containing compound. In contrast, in the present invention, the sulfur-containing compound preferably contains a crystalline phase having an argyrodite-type crystal structure. Sulfur-containing compounds containing a crystalline phase having an argyrodite-type crystal structure have superior ion conductivity, as compared with glass ceramics. However, the sulfur-containing compounds containing a crystalline phase having an argyrodite-type crystal structure tend to be harder and therefore more resistant to collapse, as compared with glass ceramics. Then, it is otherwise reasonable to consider that glass ceramics would be suitable for a sulfur-containing compound for use in the surface portion of the composite active material. In addition, there is a tendency that the interfacial contact between the active material and the solid electrolyte is particularly insufficient to result in further increased interfacial resistance, in batteries including a sulfur-containing compound containing a crystalline phase having an argyrodite-type crystal structure as a solid electrolyte, as compared with batteries including a glass ceramic as a solid electrolyte. Under these circumstances, the inventors of the present application have surprisingly found that the use of a sulfur-containing compound containing a crystalline phase having an argyrodite-type crystal structure in the surface portion has the unexpected effect of reducing the internal resistance to improve the battery performance even further. The reasons why this effect is obtained are as follows. It is surmised that, for example, the interfacial contact area between the active material 2 and the surface portion 3 is increased as shown in the schematic diagrams of Figs. 1(a) and 1(b), to thereby make the transport of lithium ions smoother. It is also surmised that the particularly high lithium ion conductivity of the sulfur-containing compound contained in the surface portion 3 contributes to a further improvement in the battery performance. In addition, it is surmised that the surface portion 3 deforms to suppress the formation of voids between the particles of the composite active material 1, to thereby make the transport of lithium ions between the composite active material 1 and the solid electrolyte (not shown) even smoother.

The argyrodite-type crystal structure refers to a crystal structure of compounds derived from a mineral represented by the chemical formula Ag₈GeS₆. Whether or not a sulfur-containing compound has a crystalline phase with an argyrodite-type crystal structure can be determined by XRD, for example. For example, a crystalline phase having an argyrodite-type crystal structure exhibits characteristic diffraction peaks at 2θ = 25.5° ± 1.0°, 30.0° ± 1.0°, and 30.9° ± 1.0°in a diffraction pattern obtained by XRD using CuKα1 radiation. Furthermore, in addition to the aforementioned diffraction peaks, the crystalline phase may also exhibits characteristic diffraction peaks at 2θ = 15.3° ± 1.0°, 18.0° ± 1.0°, 44.3° ± 1.0°, 47.2° ± 1.0°, 51.7° ± 1.0°, 58.3° ± 1.0°, 60.7° ± 1.0°, 61.5° ± 1.0°, 70.4° ± 1.0°, and 72.6° ± 1.0°, depending on the element species constituting the surface portion. To identify diffraction peaks due to an argyrodite-type crystal structure, data of PDF No. 00-034-0688, for example, is used.

In view of further improving the performance of a battery including the composite active material of the present invention, the sulfur-containing compound preferably contains a lithium (Li) element, a phosphorus (P) element, a sulfur (S) element, and a halogen (X) element. In this case, the sulfur-containing compound preferably has a composition formula (I): LiₐPS_{b}X_{c}, where X is at least one selected from the group consisting of a fluorine (F) element, a chlorine (Cl) element, a bromine (Br) element, and an iodine (I) element, in view of an improvement in lithium ion conductivity between particles of the composite active material.

In the composition formula (I), a, which represents the molar ratio of the Li element, is preferably 3.0 or more and 6.5 or less, more preferably 4.0 or more and 5.9 or less, and even more preferably 5.0 or more and 5.6 or less. When a is within this range, the cubic argyrodite-type crystal structure is stable at or near room temperature (25°C), and thus, sufficient lithium ion vacancies can be introduced into the structure to thereby enhance lithium ion conductivity.

In the composition formula (I), b is preferably 3.5 or more and 5.5 or less, more preferably 4.0 or more and 4.9 or less, and even more preferably 4.2 or more and 4.7 or less, in view of stabilizing the argyrodite-type crystal structure at or near room temperature (25 °C) to enhance the lithium ion conductivity.

In the composition formula (I), c is preferably 0.1 or more and 2.5 or less, more preferably 1.1 or more and 2.0 or less, and even more preferably 1.4 or more and 1.8 or less.

The sulfur-containing compound may also be represented by a composition formula (II): Li_{7-d}PS_{6-d}X_{d}. The composition represented by the composition formula (II) is the stoichiometric composition of an argyrodite-type crystalline phase. In the composition formula (II), X is as defined in the composition formula (I).

In the composition formula (II), d is preferably 0.4 or more and 2.2 or less, more preferably 0.8 or more and 2.0 or less, and even more preferably 1.2 or more and 1.8 or less.

The sulfur-containing compound may also be represented by a composition formula (III): Li_{7-d-2e}PS_{6-d-e}X_{d}. An argyrodite-type crystalline phase having a composition represented by the composition formula (III) is generated by, for example, a reaction between an argyrodite-type crystalline phase having a composition represented by the composition formula (II) and P₂S₅ (phosphorus pentasulfide).

In the composition formula (III), e is a value indicating the deviation, in terms of the Li₂S component, from the stoichiometric composition represented by the composition formula (II). e is preferably -0.9 or more and (-d+2) or less, more preferably -0.6 or more and (-d+1.6) or less, and even more preferably -0.3 or more and (-d+1.0) or less.

In the composition formula (I), (II), or (III), some of the P sites may be replaced with at least one or more elements selected from the group consisting of Si, Ge, Sn, Pb, B, Al, Ga, As, Sb, and Bi. In this case, the composition formula (I) is Liₐ(P_{1-y}M_{y})S_{b}X_{c}, the composition formula (II) is Li_{7-d}(P_{1-y}M_{y})S_{6-d}X_{d}, and the composition formula (III) is Li_{7-d-2e}(P_{1-y}M_{y})S_{6-d-e}X_{d}. M represents one or more elements selected from the group consisting Si, Ge, Sn, Pb, B, Al, Ga, As, Sb and Bi. y is preferably 0.01 or more and 0.7 or less, more preferably 0.02 or more and 0.4 or less, and even more preferably 0.05 or more and 0.2 or less.

The atomic ratio of the halogen (X) element to the phosphorus (P) element, X/P, in the sulfur-containing compound is, for example, preferably more than 1.0, more preferably 1.1 or more, even more preferably 1.2 or more, and yet even more preferably 1.4 or more. On the other hand, the atomic ratio X/P is, for example, preferably 2.5 or less, more preferably 2.3 or less, and even more preferably 2.2 or less. When the atomic ratio X/P is within the above-described range, lithium ion conductivity between particles of the composite active material is further improved. For example, the atomic ratio can be measured by high-frequency inductively coupled plasma optical emission spectroscopy (ICP emission spectroscopy) or SEM-EDS analysis.

In particular, when the halogen (X) element includes at least the chlorine (Cl) element and the bromine (Br) element, the atomic ratio of the total of the chlorine (Cl) element and the bromine (Br) element to the phosphorus (P) element, (Cl+Br)/P, is, for example, preferably more than 1.0, more preferably 1.1 or more, even more preferably 1.2 or more, and yet even more preferably 1.4 or more. On the other hand, the atomic ratio (Cl+Br)/P is, for example, preferably 2.5 or less, more preferably 2.3 or less, and even more preferably 2.0 or less. When the atomic ratio (Cl+Br)/P is within the above-described range, lithium ion conductivity between particles of the composite active material is advantageously improved even further. For example, the atomic ratio can be measured by high-frequency inductively coupled plasma optical emission spectroscopy (ICP emission spectroscopy) or elemental analysis using a scanning electron microscope with EDS (SEM-EDS).

Among the above-described composition formulae (I) to (III), the sulfur-containing compound is particularly preferably represented by a composition formula (IV): Li_{7-d}PS_{6-d}Cl_{d1}Br_{d2}.

In the composition formula (IV), the total mole ratio d of Cl and Br (= d1 + d2) preferably satisfies 1.0 < d ≤ 1.9. When the total mole ratio d of Cl and Br (= d1 + d2) is more than 1.0 and 1.9 or less, lithium ion conductivity can be enhanced even further. In particular, when d is 1.9 or less, the generation of a heterogeneous phase can be controlled, and a reduction in ionic conductivity can be suppressed. In view of this, d in the composition formula (IV) is preferably more than 1.0 and 1.9 or less, and particularly 1.2 or more, or 1.8 or less, and more particularly 1.4 or more, or 1.7 or less.

In the composition formula above, the ratio of the mole ratio of Br to the mole ratio of Cl, d2/d1, is, for example, preferably 0.1 or more and 10 or less, more preferably 0.3 or more and 5 or less, and even more preferably 0.5 or more and 3 or less. When d2/d1 is within the above-described range, lithium ion conductivity can be enhanced even further.

In the composition formula above, d1, which indicates the mole ratio of Cl, is preferably 0.3 or more and 1.5 or less, for example, and is more preferably 0.4 or more and 1.2 or less, particularly 0.6 or more, or 1.0 or less. When d1 is not less than the aforementioned lower limit value, lithium ion conductivity can be enhanced even further. On the other hand, when d1 is not more than the aforementioned upper limit value, it is easy to obtain the sulfur-containing compound.

In the composition formula above, d2, which indicates the mole ratio of Br, is preferably 0.3 or more and 1.5 or less, for example, and is more preferably 0.4 or more and 1.2 or less, particularly 0.6 or more, or 1.0 or less. When d2 is not less than the aforementioned lower limit value, it is easy to obtain the sulfur-containing compound. On the other hand, when d2 is not more than the aforementioned upper limit value, lithium ion conductivity can be enhanced even further.

When the halogen (X) element includes the bromine (Br) element in the composition formulae (I), (II), (III), and (IV), which each represent the sulfur-containing compound, lithium ion conductivity between the particles of the composite active material is advantageously improved even further.

The proportion of the surface portion in the composite active material of the present invention is not particularly limited as long as the effects of the present invention can be obtained, and it is, for example, preferably 0.1 mass% or more, more preferably 1.0 mass% or more, and even more preferably 2.0 mass% or more. When the proportion of the surface portion is within the above-described range, lithium ion conductivity of the composite active material can be effectively enhanced. On the other hand, this proportion is, for example, preferably 30 mass% or less, more preferably 15 mass% or less, and even more preferably 12 mass% or less. When the proportion of the surface portion is within the above-described range, lithium ion conductivity between the particles of the composite oxide of the present invention can be effectively enhanced. The proportion of the surface portion in the composite active material of the present invention can be measured by, for example, high-frequency inductively coupled plasma optical emission spectroscopy (ICP emission spectroscopy).

The method for forming the surface portion of the composite active material of the present invention, for example, may be a method including dry-mixing or wet-mixing particles of the active material and particles of a substance for the surface portion containing the sulfur-containing compound. In a case where an argyrodite-type solid electrolyte is dissolved in a solvent such as ethanol, the argyrodite-type solid electrolyte may be re-precipitated by desolvation treatment. In that case, a heterogeneous phase such as a lithium halide is disadvantageously generated, resulting in a reduction in lithium ion conductivity. To avoid this problem, dry-mixing without a solvent can be employed so as to suppress generation of a lithium halide or the like in the surface portion during the formation of the surface portion, whereby good lithium ion conductivity can be obtained. The larger than 1.0 the atomic ratio of the halogen (X) element to the phosphorus (P) element, X/P, in the sulfur-containing compound, the more remarkable the above-described effects. Therefore, when a sulfur-containing compound with a large atomic ratio X/P is used, it is particularly preferable to employ dry-mixing. It is preferable to perform dry-mixing while applying a shearing force, a compressive force, and/or an impact force. By using such a dry mixing method, the surface portion can be firmly formed on the surface of the active material. For dry-mixing, a dry particle composing machine (Nobilta (registered trademark) manufactured by Hosokawa Micron Corporation) can be used, for example.

The amount of lithium halide in the surface portion is, for example, preferably 10 mass% or less, more preferably 5 mass% or less, and even more preferably 1 mass% or less, with respect to the compound containing a crystalline phase having an argyrodite-type crystal structure. When the amount of lithium halide is within the above-described range, good lithium ion conductivity can be obtained. Examples of the lithium halide include LiCl, LiBr, LiCl₁₋ₓBrₓ (0 < x < 1), Lil, and LiF. Whether or not a lithium halide is present can be determined by XRD, for example. For example, the peaks assigned to the (111) and (200) planes are exhibited at 30.0±0.5° and 34.8±0.5° for LiCl, 28.0±0.5° and 32.5±0.5° for LiBr, and 29.0±0.5° and 33.8±0.5° for LiCl_{0.5}Br_{0.5}, when CuKα1 radiation is used as the X-ray source.

The amount of lithium halide present can also be determined on the basis of a peak intensity ratio in XRD. For example, in XRD using CuKα1 radiation as the X-ray source, the counts at the position of 27.0° is designated as the background counts A, the highest counts at 30.0° ± 1.0° assigned to the argyrodite-type crystal structure is represented by B, and the highest counts at the peak position assigned to the (200) plane of the lithium halide is represented by C. The formula (C-A)/(B-A), which represents the abundance ratio of the lithium halide to the argyrodite-type crystal structure, is preferably 0.5 or less, more preferably 0.2 or less, and even more preferably 0.1 or less. When the composite active material of the present invention has the abundance ratio within this range, the lithium ion conductivity of the composite active material is further improved. If (C-A)/(B-A) is 0.1 or less, it can be determined that there is no lithium halide peak.

### Composite Active Material

The particle size of the composite active material of the present invention is, for example, preferably 0.5 µm or more, more preferably 2.0 µm or more, and even more preferably 3.0 µm or greater, in terms of the particle size D₅₀, which is the 50th percentile of the particle size on a volume basis as determined by a laser diffraction scattering particle size distribution analysis. On the other hand, the particle size D₅₀ is, for example, preferably 15 µm or less, more preferably 12 µm or less, even more preferably 10 µm or less, and yet even more preferably 8 µm or less. When the particle size of the composite active material of the present invention is within this range, sufficiently good contact between the particles of the composite active material is achieved, and thus lithium ion transport between the particles of the composite active material is further improved.

The BET specific surface area of the composite active material of the present invention is, for example, preferably 0.1 m²/g or more, more preferably 0.2 m²/g or more, and even more preferably 0.3 m²/g or more. When the BET specific surface area of the composite active material of the present invention is within this range, points of contact between the particles of the composite active material increase, and thus the lithium ion transport between the particles of the composite active material is further improved. On the other hand, the BET specific surface area is, for example, preferably 10 m²/g or less, more preferably 5.0 m²/g or less, and even more preferably 4.0 m²/g or less. The BET specific surface area of the composite active material of the present invention is preferably within this range, in view of easily dispersing the composite active material uniformly during the production of an all-solid-state battery. The BET specific surface area within this range can be obtained by, for example, controlling the particle size of the active material constituting the composite active material of the present invention, or controlling the amount and the coating state of the surface portion coating the active material.

The composite active material of the present invention can be mixed with a solid electrolyte and a conductive material to prepare an electrode material mixture. The electrode material mixture is useful for forming an electrode (positive or negative electrode) of a battery. The solid electrolyte contained in the electrode material mixture may be the same as or different from the sulfur-containing compound used for the surface portion constituting the composite active material. When the solid electrolyte is a material different from the sulfur-containing compound, the solid electrolyte may or may not contain a crystalline phase having an argyrodite-type crystal structure. Such a solid electrolyte can be selected appropriately from materials conventionally used for solid-state batteries. For a case where the solid electrolyte contains a crystalline phase having an argyrodite-type crystal structure, the same description for the sulfur-containing compound above appropriately applies to the solid electrolyte, and therefore a redundant description thereof is omitted here. On the other hand, in a case where the solid electrolyte does not contain a crystalline phase having an argyrodite-type crystal structure, the solid electrolyte may be, for example, a sulfur-containing compound made of a glass ceramic, or an oxide-based or nitride-based solid electrolyte having lithium ion conductivity.

As the electric conductive material, an electric conductive substance made of a carbon material can be used, for example.

In the present invention, the above-described electrode material mixture can be mixed with a binder and a solvent to prepare a coating composition. For example, the coating composition is useful for forming an electrode (positive or negative electrode) by applying the coating composition to the surface of a current collector. An electrode can be formed on the surface of the current collector by, for example, applying the coating composition to the surface of the current collector and drying the resulting coating film to remove the solvent. The electrode thus formed contains the above-described electrode material mixture and the binder. Any binders and solvents conventionally used in the art can be used without particular limitation as the binder and the solvent for the coating composition.

A battery including the composite active material of the present invention may be a battery having a structure including, for example, a positive electrode layer, a negative electrode layer, and a solid electrolyte layer located between the positive electrode layer and the negative electrode layer, that is to say, a solid-state battery. In a case where the composite active material of the present invention is a positive electrode active material, the positive electrode layer contains the composite active material of the present invention. On the other hand, in a case where the composite active material of the present invention is a negative electrode active material, the negative electrode layer contains the composite active material of the present invention. In either case, the solid electrolyte contained in the solid electrolyte layer of the battery may be the same as or different from the sulfur-containing compound used for the surface portion constituting the composite active material. The solid electrolyte may be the same as that described in the section of the electrode material mixture, and a redundant description thereof is therefore omitted here.

The present invention has been described above by way of preferred embodiments thereof, but the present invention is not limited to the embodiments given above.

With regard to the embodiments described above, the present invention further discloses the following composite active materials.
(1) A composite active material comprising:
   an active material; and
   a surface portion located on a surface of the active material and comprising a sulfur-containing compound,
   wherein the active material comprises a complex oxide containing a lithium (Li) element, a manganese (Mn) element, and an oxygen (O) element and having a spinel-type crystal structure.
(2) The composite active material as set forth in clause (1), wherein the active material contains an element M1 and an element M2,
   wherein M1 is one or a combination of two or more selected from the group consisting of a nickel (Ni) element, a cobalt (Co) element, and an iron (Fe) element, and
   M2 is one or a combination of two or more selected from the group consisting of a sodium (Na) element, a magnesium (Mg) element, an aluminum (Al) element, a phosphorus (P) element, a potassium (K) element, a calcium (Ca) element, a titanium (Ti) element, a vanadium (V) element, a chromium (Cr) element, a copper (Cu) element, a gallium (Ga) element, an yttrium (Y) element, a zirconium (Zr) element, a niobium (Nb) element, a molybdenum (Mo) element, an indium (In) element, a tantalum (Ta) element, a tungsten (W) element, a rhenium (Re) element, and a cerium (Ce) element.
(3) The composite active material as set forth in claim 2, wherein the complex oxide is represented by formula (1) below:

   Li₁₊ₓ(M1_{y}M2_{z}Mn_{2-x-y-z})O_{4-δ} (1)

   wherein 0 ≤ x ≤ 0.20, 0.20 ≤ y ≤ 1.20, 0 ≤ z ≤ 0.5, and 0 ≤ δ ≤ 0.2.
(4) The composite active material as set forth in clause (1), wherein the complex oxide is represented by formula (2) below:

   Li₁₊ₓ(Ni_{y}M_{z}Mn_{2-x-y-z})O_{4-δ} (2)

   wherein 0 ≤ x ≤ 0.20, 0.20 ≤ y ≤ 0.70, 0 ≤ z ≤ 0.5, and 0 ≤ δ ≤ 0.2, and M is one element or a combination of two or more elements selected from the group consisting of Na, Mg, Al, P, K, Ca, Ti, V, Cr, Fe, Co, Cu, Ga, Y, Zr, Nb, Mo, In, Ta, W, Re, and Ce.
(5) The composite active material as set forth in any one of clauses (1) to (4), wherein the active material includes a core particle and a coating portion located on a surface of the core particle.
(6) The composite active material as set forth in clause (5), wherein the coating portion comprises a lithium (Li) element, an element A, and an oxygen (O) element,
   wherein the element A is at least one selected from the group consisting of a titanium (Ti) element, a zirconium (Zr) element, a tantalum (Ta) element, a niobium (Nb) element, and an aluminum (Al) element.
(7) The composite active material as set forth in any one of clauses (1) to (6), wherein the coverage of the active material by the surface portion is 60% or more.
(8) The composite active material as set forth in any one of clauses (1) to (7), wherein the surface portion has a thickness of more than 0 nm and 500 nm or less.
(9) The composite active material as set forth in any one of clauses (1) to (8), wherein the sulfur-containing compound contains a lithium (Li) element, a phosphorus (P) element, a sulfur (S) element, and a halogen (X) element.
(10) The composite active material as set forth in clause (9), wherein the atomic ratio of the halogen (X) element to the phosphorus (P) element, X/P, is more than 1.0.
(11) The composite active material as set forth in clause (9) or (10), wherein the halogen (X) element includes at least a bromine (Br) element.
(12) The composite active material as set forth in any one of clauses (9) to (11), wherein the halogen (X) element includes at least a chlorine (Cl) element and a bromine (Br) element, and
   the atomic ratio of the total of the chlorine (Cl) element and the bromine (Br) element to the phosphorus (P) element, (Cl+Br)/P, is more than 1.0.
(13) The composite active material as set forth in any one of clauses (1) to (12), wherein the sulfur-containing compound contains a crystalline phase having an argyrodite-type crystal structure.
(14) An electrode material mixture including the composite active material as set forth in any one of clauses (1) to (13), a solid electrolyte, and an electric conductive material.
(15) The electrode material mixture as set forth in clause (14), wherein the solid electrolyte is a material different from the sulfur-containing compound.
(16) A coating composition including the electrode material mixture as set forth in clause (14) or (15), a binder, and a solvent.
(17) An electrode including the electrode material mixture as set forth in clause (14) or (15) and a binder.
(18) A battery including a positive electrode layer, a negative electrode layer, and a solid electrolyte layer located between the positive electrode layer and the negative electrode layer,
   wherein the positive electrode layer contains the composite active material as set forth in any one of clauses (1) to (13).
(19) The battery as set forth in clause (18),
   wherein the solid electrolyte layer contains a solid electrolyte, and
   the solid electrolyte is a different material from the sulfur-containing compound.

### Examples

Hereinafter, the present invention will be described in greater detail by way of examples. However, the scope of the present invention is not limited to the examples given below. Unless otherwise specified, "%" means "mass%".

### Example 1

### (1) Provision of Core Particles

A lithium manganese-containing complex oxide represented by the compositional formula [Li_{1.06}(Ni_{0.48}Mn_{1.46})O_{4-δ}] (hereinafter referred to as "LNMO") was used for core particles.

### (2) Production of Active Material

While 213 mL of an aqueous lithium hydroxide solution having an adjusted lithium ion concentration of 22.9 g/L was heated at 90°C or higher, 3.8 g of niobium hydroxide and 8.9 mL of 30% hydrogen peroxide solution were dissolved therein to obtain a mixed aqueous solution. 50 g of the core particles was added to the mixed aqueous solution to prepare a slurry. The slurry was heated and kept at 90°C or higher for 30 minutes. As a result of heating at 90°C or higher, a Li-Nb-O-based compound, which was adsorbable on the surface of a core material, was generated on the surface of the core particles. The resulting liquid was decanted, and then the residue was washed with 600 mL of a 0.14 mol/L lithium sulfate solution three times. After that, the resultant was heat-treated at 120°C for 2 hours to obtain a target active material. The particle size D₅₀, on a volume basis, of the active material was 3.0 µm. The Nb content in the active material was 3.1 mass% as measured by ICP emission spectroscopy.

### (3) Formation of Surface Portion

A Li₂S powder, a P₂S₅ powder, a LiCl powder, and a LiBr powder were weighed so as to satisfy a composition Li_{5.4}PS_{4.4}Cl_{0.8}Br_{0.8}, and were pulverized and mixed in a ball mill for 6 hours to prepare a mixed powder.

The mixed powder was filled into a carbon container, heated in a tubular electric furnace at a temperature increase and decrease rate of 200°C/h while flowing H₂S gas (100% purity) at 1.0 L/min, and fired at 500°C for 4 hours to obtain a fired product. The fired product was pulverized, and then sized through a sieve with an opening size of 53 µm to obtain a powder material for a surface portion. All the operations of weighing, mixing, placement into the electric furnace, removal from the electric furnace, pulverizing, and sizing were performed in a glove box purged with sufficiently dried Ar gas (dew point: -60 °C or lower). The obtained powder material was analyzed by XRD, and as a result, it was found that the powder material had an argyrodite-type crystal structure. The particle size D₅₀, on a volume basis, of the powder material was 0.7 µm. The ionic conductivity at room temperature was found to be 4.4 mS/cm.

4.8 g of the thus obtained powder material for a surface portion and 40 g of the active material particles obtained in the preceding section (2) were mixed using a dry particle composing machine NOB-MINI manufactured by Hosokawa Micron Corporation, to cause the powder material to firmly adhere to the surface of the active material particles. Testing was performed under the conditions of a rotor rotation speed of 4000 rpm, a processing time of 12.5 min, a rotor clearance of 2 mm, a flow rate of air for shaft cooling of 5 L/min, and a dew point of -50°C, in a dry air atmosphere. Particles of a composite active material were obtained in this manner. The BET specific surface area of the obtained composite active material was 3.07 m²/g. The obtained composite active material was subjected to SEM-EDS analysis, and as a result, found to have a (Cl+Br)/P atomic ratio of more than 1.0.

### Comparative Example 1

In this comparative example, the active material particles obtained in the section (2) of Example 1 and the constituent material for the surface portion obtained in Example 1 were mixed in a mortar at the same mass ratio as in Example 1, and the resultant was used as a positive electrode active material.

### Evaluation

For each of the composite active materials obtained in Example and Comparative Example, the particle size D₅₀ was measured. Also, the coverage by the surface portion and the thickness of the surface portion were measured using a method described below. Furthermore, the reaction resistance and the 5 C discharge capacity of a solid-state battery including the composite active material were measured using a method described below. Table 1 shows the results.

### Coverage by Surface Portion and Thickness of Surface Portion

Using an XPS system, VersaProbe III, manufactured by ULVAC-PHI, Inc., depth profiling of the composite active material was performed in an inward direction from the particle surface. The conditions for measurement were as follows.
Excitation X-ray: Al Kα radiation (1486.6 eV)
Tube voltage: 15 kV
Tube current: 3.3 mA
X-ray irradiation area: 200 µmϕ
X-ray scanning area: 1000 µm × 300 µm
Pass energy: 112.0 eV
Energy step: 0.1 eV
Detection angle: 45°
Measurement temperature: -80°C or lower
Elements analyzed: Li1s, P2p, S2p, Cl2p, Br3d, Mn2p1/2, Ni2p1/2, Nb3 d
Condition of ion gun: 4 kV
Ion beam raster range: 2 mm × 2 mm
Sputtering rate: 8.5 nm/min (in terms of SiO₂)

The maximum measurement depth was set to be greater than or equal to the depth at which a reduced saturation region (plateau region) was reached in an S2p semi-quantitative profile measured in the inward direction from the surface. Specifically, when linear approximation is made for two or more consecutive measurement points in a range of 100 nm or deeper in the S2p semi-quantitative profile, the depth at which the slope of the line obtained by the linear approximation first became -0.002 or more from the surface toward the inside was used as the depth at which the reduced saturation region was reached.

For preparation of a sample and conveyance thereof to the system, a powder sample was pelletized using a press in an Ar atmosphere with a dew point of -60°C or lower, and then the resulting pellet was fixed with a metal jig to a sample stand dedicated to the XPS system, and conveyed to the XPS system using an air shut-off vessel manufactured by ULVAC-PHI, Inc.

The XPS data was analyzed using data analysis software ("MultiPak Ver 9.9" manufactured by ULVAC-PHI, Inc.), and semi-quantitative values in the depth direction was calculated for each element. Shirley was used for background mode. For example, charge correction was performed at the Nb3d5/2 peak (206.7 eV).

Since the Br3d peak interferes with the Ni3p peak, the Br semi-quantitative values were calculated from the peak area from which the interference component of Ni3p was removed by waveform separation analysis. Specific waveform separation parameters vary depending on the compound of the coating and the compound of the core, and therefore, it is desirable to obtain the Br3d and Ni3p spectra for each of the compound of the coating and the compound of the uncoated core, and to determine and use peak parameters that reproduce each spectrum.

### Coverage by Surface Portion

With respect to the semi-quantitative values of the elements in the depth direction calculated by XPS, a semi-quantitative ratio (P+S+Cl+Br)/(P+S+Cl+Br+Nb+Ni+Mn) was calculated from the semi-quantitative values of the respective elements at the outermost surface (sputtering depth: 0 nm) and used as the coverage.

### Thickness

In the S2p semi-quantitative profile in the depth direction calculated by XPS, the value of the depth at which an intermediate value between the maximum value and the minimum value was obtained was calculated as the thickness of the coating layer. In a case where the depth at which the intermediate value between the maximum value and the minimum value of the S2p half quantitative values did not coincide with the depth of any measurement point, the value of the depth corresponding to the intermediate value was calculated from the linear approximation formula for the two measurement points located before and after the intermediate value.

### 5 C Discharge Capacity

Solid-state batteries were produced in the following manner by using the composite active materials obtained in Example and Comparative Example. The composite active materials produced in Example and Comparative Example were each used as a positive electrode active material. A graphite powder was used as a negative electrode active material, and the same powder as for forming the surface portion in Example 1 was used as a solid electrolyte powder.

The composite active material obtained in Example 1 or Comparative Example 1, the solid electrolyte powder, and an electric conductive material (VGCF) powder were mixed in a mortar at a mass ratio of 67.2:22.8:10 to obtain a positive electrode material mixture.

A negative electrode material mixture was prepared by mixing the graphite powder and the same solid electrolyte powder as for forming the surface portion in Example 1 in a mortar at a mass ratio of 50:50.

Provided was a ceramic cylinder having openings at its upper and lower ends and also having an opening diameter of 10.5 mm and a height of 18 mm, and 0.1 g of solid electrolyte was poured into the ceramic cylinder with the lower opening closed with an electrode made of SUS. An electrode was attached to the upper opening, and uniaxial pressing was performed at about 0.8 tf/cm² to form an electrolyte layer. The upper electrode was temporarily removed, the positive electrode material mixture was poured onto the electrolyte layer and smoothed flat, and then the upper electrode was attached again. Subsequently, the lower electrode was temporarily removed, and the negative electrode material mixture was poured onto the electrolyte layer. The lower electrode was attached again, and uniaxial pressing was performed at about 4.6 tf/cm². After that, the resulting stack was clamped from both the upper electrode side and the lower electrode side, and bound together under a torque pressure of 4 N•m, to thereby produce an all-solid-state battery having a capacity equivalent to 1.5 mAh. The production steps of the all-solid-state battery were performed in a glove box purged with dry air with an average dew point of -70°C.

The battery thus obtained was placed in an environmental testing chamber kept at 25°C, and connected to a charge/discharge measuring system for evaluation. Charging was performed using a CC-CV method in which the upper limit voltage was set to 5.0 V, and discharging was performed using a CC method in which the lower limit voltage was set to 3.0 V.

From the first cycle to the third cycle, charging and discharging was repeated at a current density of 0.1 C, and then, from the fourth cycle to the ninth cycle, charging was performed at a current density of 0.1 C. In the fourth cycle, discharging was performed at a current density of 0.1 C; in the fifth cycle, discharging was performed at a current density of 0.5 C; in the sixth cycle, discharging was performed at a current density of 1 C; in the seventh cycle, discharging was performed at a current density of 2 C; in the eighth cycle, discharging was performed at a current density of 3 C; and in the ninth cycle, discharging was performed at a current density of 5 C.

The 5 C discharge capacity was calculated from the value of the discharge capacity in the ninth cycle.

### Reaction Resistance

Upon completion of the discharging in the third cycle of the discharge cycles in the above-described measurement of the 5 C discharge capacity, the solid-state battery was charged at a current density of 0.1 C to a charge capacity of 0.589 mAh, which was 50% of the battery capacity, and then AC impedance was measured. The charged cell was subjected to impedance measurement using SOLARTRON 1255B FREQUENCY RESPONSE ANALYZER available from TOYO Corporation. The AC amplitude was set to 10 mV, and the frequency range was set to 1.0×10⁻⁶ to 1.0×10⁻¹ Hz. The reaction resistance (Ω) was calculated from the intersection with the horizontal axis in a Cole-Cole plot, which was a complex impedance plane plot of the measurement results.

**Table 1**

| | | Ex. 1 | Com. Ex. 1 |
|---|---|---|---|
| Active material | Core particle | Li_{1.06}Ni_{0.48}Mn_{1.46}O_{4-δ} | Li_{1.06}Ni_{0.48}Mn_{1.46}O_{4-δ} |
| | Coating portion | LiNbO | LiNbO |
| Feed for surface portion (%, relative to active material) | | 10.7 | 10.7 |
| Surface portion | Crystalline phase of surface portion | Argyrodite | Argyrodite |
| | Composition of surface portion | Li_{5.4}PS_{4.4}Cl_{0.8}Br_{0.8} | Li_{5.4}PS_{4.4}Cl_{0.8}Br_{0.8} |
| | Coating method | Dry coating | Mixing in mortar |
| | Coverage [%] | 84 | 55 |
| | Thickness [nm] | 202 | 262 |
| Composite active material | D₅₀ [µm] | 3.6 | 3.1 |
| | Reaction resistance [Ω] | 26.3 | 37.8 |
| | 5 C Discharge capacity [mAh/g] | 85.2 | 83.4 |

As is clear from the results shown in Table 1, the solid-state battery including the composite active material obtained in Example has a lower reaction resistance and a higher 5 C discharge capacity than the solid-state battery of Comparative Example.

### Industrial Applicability

As has been described in detail above, there is provided a composite active material that can give good battery performance, according to the present invention.

## Claims

1. A composite active material comprising:
an active material; and
a surface portion located on a surface of the active material and
comprising a sulfur-containing compound,
wherein the active material comprises a complex oxide containing a lithium (Li) element, a manganese (Mn) element, and an oxygen (O) element and having a spinel-type crystal structure.

2. The composite active material according to claim 1, wherein the active material contains an element M1 and an element M2,
wherein M1 is one or a combination of two or more selected from the group consisting of a nickel (Ni) element, a cobalt (Co) element, and an iron (Fe) element, and
M2 is one or a combination of two or more selected from the group consisting of a sodium (Na) element, a magnesium (Mg) element, an aluminum (Al) element, a phosphorus (P) element, a potassium (K) element, a calcium (Ca) element, a titanium (Ti) element, a vanadium (V) element, a chromium (Cr) element, a copper (Cu) element, a gallium (Ga) element, an yttrium (Y) element, a zirconium (Zr) element, a niobium (Nb) element, a molybdenum (Mo) element, an indium (In) element, a tantalum (Ta) element, a tungsten (W) element, a rhenium (Re) element, and a cerium (Ce) element.

3. The composite active material according to claim 2, wherein the complex oxide is represented by formula (1) below:
Li₁₊ₓ(M1_{y}M2_{z}Mn_{2-x-y-z})O_{4-δ} (1)
wherein 0 ≤ x ≤ 0.20, 0.20 ≤ y ≤ 1.20, 0 ≤ z ≤ 0.5, and 0 ≤ δ ≤ 0.2.

4. The composite active material according to claim 1, wherein the complex oxide is represented by formula (2) below:
Li₁₊ₓ(Ni_{y}M_{z}Mn_{2-x-y-z})O_{4-δ} (2)
wherein 0 ≤ x ≤ 0.20, 0.20 ≤ y ≤ 0.70, 0 ≤ z ≤ 0.5, and 0 ≤ δ ≤ 0.2, and M is one element or a combination of two or more elements selected from the group consisting of Na, Mg, Al, P, K, Ca, Ti, V, Cr, Fe, Co, Cu, Ga, Y, Zr, Nb, Mo, In, Ta, W, Re, and Ce.

5. The composite active material according to claim 1 or 2, wherein the active material comprises a core particle and a coating portion located on a surface of the core particle.

6. The composite active material according to claim 5, wherein the coating portion comprises a lithium (Li) element, an element A, and an oxygen (O) element, wherein the element A is at least one selected from the group consisting of a titanium (Ti) element, a zirconium (Zr) element, a tantalum (Ta) element, a niobium (Nb) element, and an aluminum (Al) element.

7. The composite active material according to claim 1 or 2, wherein a coverage of the active material by the surface portion is 60% or more.

8. The composite active material according to claim 1 or 2, wherein the surface portion has a thickness of more than 0 nm and 500 nm or less.

9. The composite active material according to claim 1 or 2, wherein the sulfur-containing compound comprises a lithium (Li) element, a phosphorus (P) element, a sulfur (S) element, and a halogen (X) element.

10. The composite active material according to claim 9, wherein an atomic ratio of the halogen (X) element to the phosphorus (P) element, X/P, is more than 1.0.

11. The composite active material according to claim 9, wherein the halogen (X) element comprises at least a bromine (Br) element.

12. The composite active material according to claim 9, wherein the halogen (X) element comprises at least a chlorine (Cl) element and a bromine (Br) element, and an atomic ratio of the total of the chlorine (Cl) element and the bromine (Br) element to the phosphorus (P) element, (Cl+Br)/P, is more than 1.0.

13. The composite active material according to claim 1 or 2, wherein the sulfur-containing compound comprises a crystalline phase having an argyrodite-type crystal structure.

14. An electrode material mixture comprising the composite active material according to claim 1 or 2, a solid electrolyte, and an electric conductive material.

15. The electrode material mixture according to claim 14, wherein the solid electrolyte is a material different from the sulfur-containing compound.

16. A coating composition comprising the electrode material mixture according to claim 14, a binder, and a solvent.

17. An electrode comprising the electrode material mixture according to claim 14 and a binder.

18. A battery comprising a positive electrode layer, a negative electrode layer, and a solid electrolyte layer located between the positive electrode layer and the negative electrode layer, wherein the positive electrode layer comprises the composite active material according to claim 1 or 2.

19. The battery according to claim 18, wherein the solid electrolyte layer comprises a solid electrolyte, and the solid electrolyte is a different material from the sulfur-containing compound.
